# EUROPEAN PATENT SPECIFICATION

(11) **EP 2 743 550 B1**
(45) Date of publication and mention of the grant of the patent: **25.03.2015**
(21) Application number: 14000958.0
(22) Date of filing: 23.12.2010
(51) Int. Cl.: F16K 3/28, F16K 3/30, F16D 9/08, F16K 3/12, F16K 3/316

(54) **Non-rising stem type gate valve**
Schiebeventil mit nicht steigendem Schaft
Clapet obturateur de type robinet-vanne à tige non montante

(30) Priority: 24.12.2009 CN 200910266355
(43) Date of publication of application: 18.06.2014
(62) Divisional of application: 10838520.4
(73) Proprietor: Tyco Water Valve (Shanghai) Co. Ltd., Shanghai 201700 (CN)
(72) Inventor: Tucker, Ealden, 201700 Shanghai (CN); Zhang, Ying, 201700 Shanghai (CN); Pu, Changlie, 201700 Shanghai (CN)
(74) Representative: Lawrence, John

(56) References cited:
- EP-A2- 0 171 693
- US-A- 3 734 458
- US-A- 4 629 160
- US-A1- 2007 164 248
- US-A1- 2009 057 598

## Description

### Technical Field

This invention relates to a non-rising spindle gate valve which is used in the pipeline system.

### Prior Arts

Gate valve is widely used in pipeline system to cut off and open the medium flow in the pipeline by means of driving the closing device (wedge) through the stem to move vertically along the seat centreline of the gate valve. Gate Valve is usually applied to the situation where the wedge is remained fully open or fully closed without need to frequently open and close. The advantage of the gate valve: low fluid resistance is low while fully opened, easy to open and shut (not including special situation when sealing surface is bite); applicable to a two-way flow of medium, without direction requirements; the sealing surface is not easy to be eroded when valve is completely opened; structural length is short; not only suitable for small valves, but also suitable for larger valves.

The gate valve can be classified as following according to the sealing type: One is Metal sealing gate valve of which the seat sealing kits are metal seal ring. The other is resilient sealing gate valve in which the outside of the wedge is covered by elastomer such as rubber. As the technology develops, more resilient sealing gate valves are used in the current gate valve industry, especially in building services, water supply system, and some other low pressure pipeline systems. Besides, the gate valve can be classified as following according to stem thread position. One is non-rising gate valves (NRS) in which drive thread kit is at lower end of the stem, and the stem can only rotate but cannot rise or go down. The other is Outside Spindle and Yoke gate valve (OS&Y) in which drive thread kit is at upper end of the stem, the stem can only move up and down but cannot rotate.

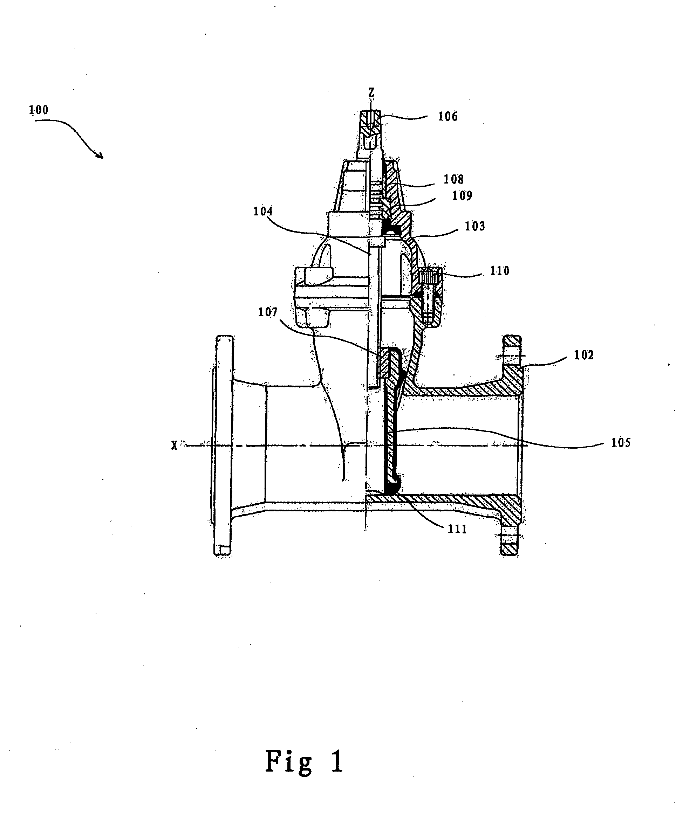

Shown in Figure 1 below is the traditional resilient sealing valve 100 describing gate valve structure and operations. As shown in Figure 1, gate valve 100 includes body 102, the gate valve cap 103 which is fixed to the gate valve body 102 through screws 110, stem 104, wedge 105 and drive cap. Gate valve stem 104 is installed in the gate valve cap 103 through the flat sliding bearing 109 to be relatively rotatable, such that stem 104 can only rotate around the vertical axis, rather than vertical movement. To achieve the sealing between the gate valve stem 104 and gate valve cap 103, the stem 104 is directly slotted to be provided with O-ring 108. Wedge nut 107 connects with the wedge thread at the lower end of stem 104. The wedge nut 107 is fitted with wedge 105. The shape of wedge 105 adapts to the inside cavity of valve body 102 to open and close the gate valve 100. The external part of valve wedge 105 will generally be coated. That is, a coating of elastomer (such as the rubber layer 111) with a thickness will be provided on the wedge in order to achieve the resilient sealing of valve wedge to the flow medium.

US 3734458 discloses a valve according to the preamble of claim 1. US 4629160 discloses a valve with a wedge having guides and a rubber layer coating.

Drive cap (not shown) is fitted at the upper end 106 of stem 104 to operate valve 100.

At work, by rotating cap 106, stem 104 is driven to rotate, thus wedge nut 107 together with wedge 105 moves up and down along the valve stem 104 to achieve the opening and close of the gate 100.

This traditional resilient sealing gate valve has problems below.

Since the sliding bearings are used, the friction coefficient will be high. For example, when movement kits are steel and bronze, the sliding friction coefficient is 0.1-0.15, which leads to large sealing and operational torques; the relevant parts are easily deformed or impaired, the fatigue life is short. And also it causes difficulties in assembly.

Under the use of common shear cap described above, the operator may apply too much torque, to damage inner parts of the valve for overloading.

Existing rubber coatings of wedges usually take measures of stuffing a rubber sheet with a certain thickness to position rough wedge castings inside. But soft rubber will produce a big deviation when receiving an uneven force, so the thickness of rubber coating will be uneven. As a result, the place where its thickness is thin is easy to be damaged, such that the inside gate valve components are exposed to the medium and experience corrosion. Further, the torque is too high because the thickness of rubber coating is uneven.

### Summary of the Invention

The purpose of the invention is to solve the problems above by providing a gate valve which has a small operation torque, is sealed reliably, has a long service life, and is easy to assemble. It can protect the inside components of the gate valve effectively from excessive operational torque.

According to the invention, it provides a non-rising gate valve, which comprises a body, a bonnet connected to the body, a stem, a wedge and a shear device, an upper end of said stem being connected to the shear device and a lower end thereof being connected to the wedge, wherein the valve wedge includes a wedge casting, guides and a rubber coating layer, said guides are fitted in respective grooves of the wedge casting to position said wedge casting in the process of wedge rubber coating.

Preferably, said stem is relatively rotatably supported in said bonnet by rolling bearings, the rolling bearing with low friction coefficient is used to replace currently used sliding friction structures. As the rolling friction is low (the friction coefficient range is 0.002-0.004), it can reduce friction and operation torque of the gate valve, extend the life of moving parts so as to extend the product life. At the same time, rolling bearing has the function of axial positioning and support.

Preferably, the above shear device includes a cap to receive operation torque applied by a user, a connection sleeve to connect with said stem and an insurance block to connect said cap and said connection sleeve, wherein the insurance block, upon receiving a torque greater than a predetermined torque, disconnects between said cap and said connection sleeve. Further, said insurance block includes an upper part which connects with said cap, a lower part which connects with said connection sleeve, and a middle part which connects with the upper part and the lower part, the sectional area of said middle part is smaller than those of said upper part and lower part.

According to such an over torque insurance shear device, when the operation torque is beyond the allowed value, it will fracture and break. Therefore, it is possible to prevent an excessive operating torque from transmitting continually to the inner parts of the valves so as to protect the inner parts of the valves efficiently. Moreover, maintenance cost is reduced since only the broken insurance block is need to be replaced and the gate valve is unnecessary to be replaced.

The wedge of the invention uses guides being accurate positioned in rubber coating. Coating is accurate and is able to control the thickness of the rubber coating so as to satisfy the requirements of the design, ensuring that the thickness is uniform to achieve the designed operation torque and increase the fatigue life.

Preferably, the described gate valve further includes a top plate installed above said bonnet, and a seal including a plurality of rings is provided between said top plate and said stem. The sealing parts can include O-ring and PTFE ring (poly-tetra-fluoro-ethylene)

According to the gate valve of the invention, by combining O ring with PTFE ring, a plurality of seals are formed. Further, PTFE material has the function of lubrication, which can reduce the abrasion of the O ring and extend the life of the whole seal kit.

Preferably, the unique inner hexagon screws are used to connect the body and the bonnet, and to connect the bonnet and the top plate. According to the utilized inner hexagon screws in this invention, the tapered surface of the head of the inner hexagon screws matches that of the connecting part, thus the top plate and the valve bonnet can be better automatically centered. And the connecting parts can also have better and more effective centering without need to assemble and adjust, reducing assembling time and cost.

As described above, the gate valve of this invention has following advantages: (1) under the required seal performance condition, the operation torque is relatively lower due to the rolling bearings. (2) When the operation torque is over the allowed operating torque, the shear device will fracture and damage so as to protect the inner parts of the valve. (3) Excellent positioning of the wedge rubber coating, uniform thickness of the rubber coating, no defects of exposing iron. (4) Under the same conditions of work pressure, fatigue life is better so as to extend the valve life due to low operation torque and even thickness of the wedge. (5) It has several sealing kits and has the function of self-lubricating. Sealing is more credible and can be used for a longer time. (6) The connecting CSK(Countersunk) screws are used.

The centering function is good, and assembling is simple.

### Brief Description of Drawings

Fig.1 is schematic sectional view of the prior art resilient seat non-rising spindle gate valve;
Fig.2 is assembled perspective view of the gate valve in this invention;
Fig.3 is exploded perspective view of the gate valve in this invention;
Fig.4 is the sectional view of gate valve in this invention;
Fig.4A is the magnified sectional view of the part E in Fig.4;
Fig.5A is the magnified sectional view of rolling bearing in Fig.4;
Fig.5B is exploded perspective view of the rolling bearing;
Fig.6A is assembled sectional view of over torque shear device of gate valve in this invention;
Fig.6B is assembled perspective view of the over torque shear device, wherein over torque shear device has been cut half to show it's inside structure;
Fig.6C is exploded perspective view of the over torque shear device;
Fig.6D is the perspective view of insurance block in this over torque shear device;
Fig.7 is schematic view of the wedge of the gate valve in this invention;
Fig.7A is a top sectional view of the wedge of Fig.7 along A-A line of Fig.7B;
Fig.7B is a sectional view of the wedge along B-B line of Fig.7A;
Fig.7C is the perspective view of the guides in the wedge;
Fig.8A, 8B is the schematic view showing how to use rubber coating mould to wedge rubber coating, Fig.8A shows the status before putting wedge casting in the mould, Fig.8B shows the status after putting wedge casting in the mould;
Fig.9 is magnified sectional view of the stem sealing kits of the gate valve in Fig.9;
Fig.10A is magnified sectional view of connecting screws of the gate valve shown in Fig.4;
Fig.10B is partial perspective view of the connecting screws position shown in Fig.10A.

### Embodiments

Combining with attached drawings, the specified implement methods will be further specified in this invention.

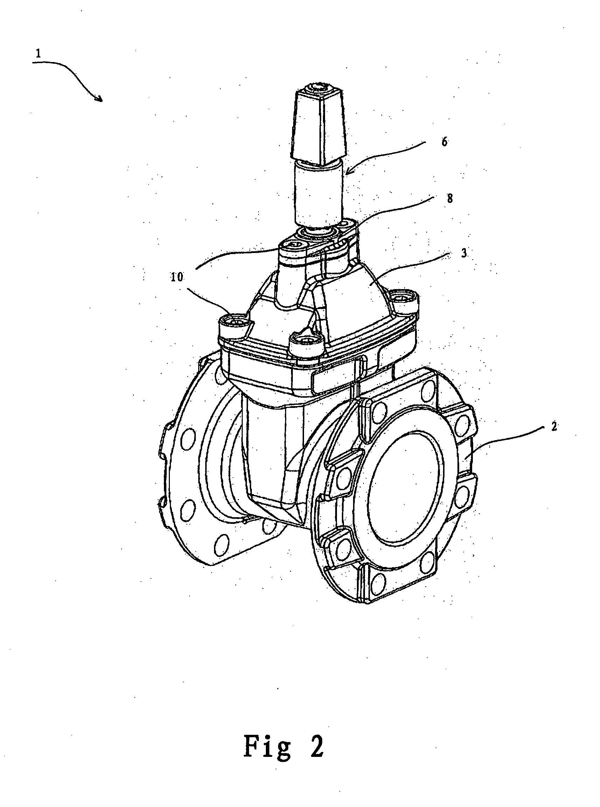

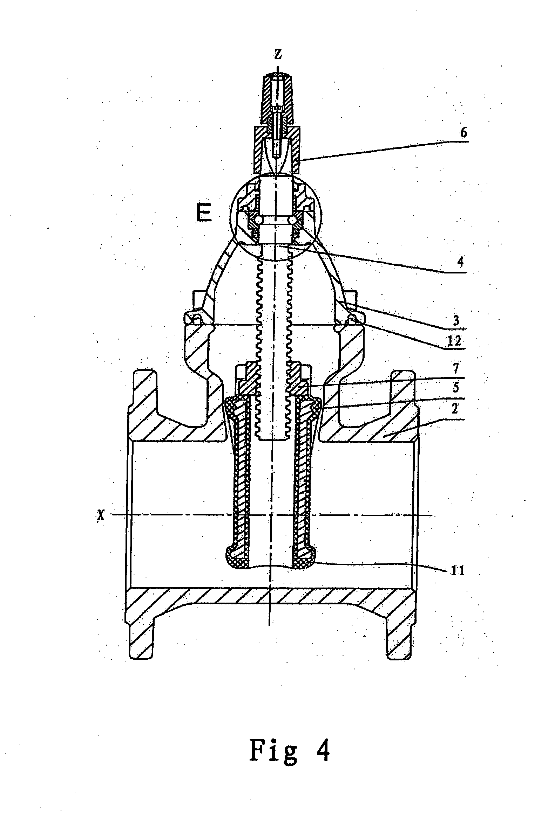

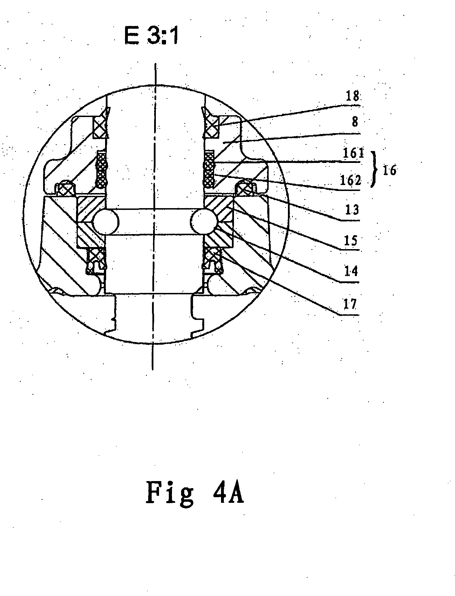

As Fig.2-4 shows, the gate valve 1 in this invention includes body 2, bonnet 3 which is fixed to body 2 through connecting screws, the top plate 8 which is fixed to the bonnet 3 through connecting screws 10, stem 4, wedge nut 7, wedge 5 and shear device 6.

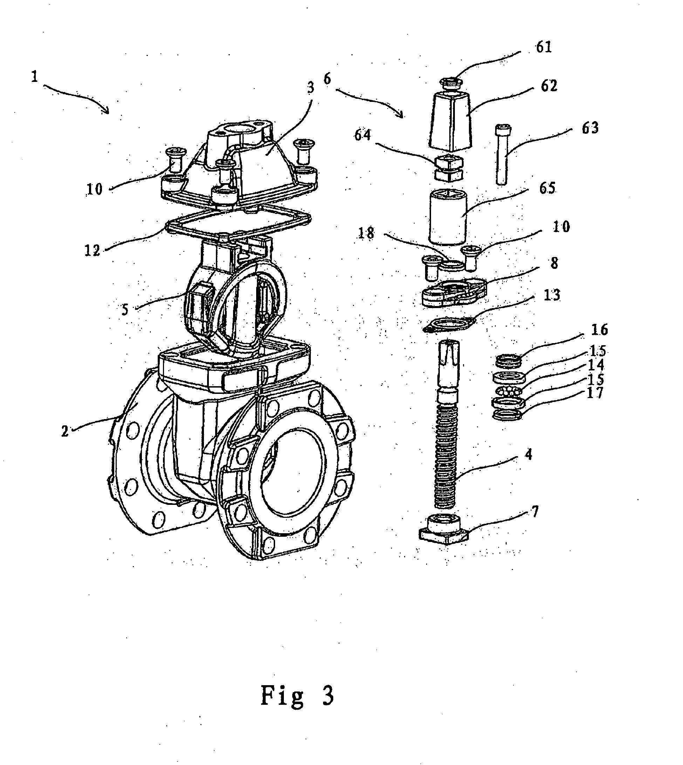

Stem 4 can be relatively rotatably supported in the inside hole of the bonnet 3 through rolling bearing 14 and corresponding sleeve 15, so that the stem 4 can only rotate around vertical centreline Z rather than moving vertically. The upper end of stem 4 is fitted with shear device 6 to enable the operators to rotate stem 4 by rotating shear device 6. The outside surface of lower end of the stem 4 has external thread to connect with the internal thread of the wedge nut 7. Therefore, when the stem 4 is rotating, the wedge nut 7 can move up and down along stem 4. As the Fig.3 shows, the lower end of wedge nut 7 has flange, which can be fitted in the groove 523 of the upper part of wedge 5 to integrate wedge nut 7 and wedge 5. Thus when the wedge nut 7 moves up and down along stem 4, wedge 5 moves together with wedge nut 7 so as to open or close the gate valve 1. When wedge nut 5 moves upward, the gate valve 1 is opened to enable flow of the medium. When wedge nut 5 moves downward, the gate valve 1 is closed to cut off the flow of the medium.

The seal 12 is set between bonnet 3 and body 2 to prevent leakage of medium. In order to realize the sealing between stem 4 and bonnet 3: below the sleeve 15, the sealing ring 17 is set between stem 4 and bonnet 3; top plate 8 which is made from stainless steel is installed above the bonnet 3, stem sealing kit 16 including several seal rings is set between top plate 8 and stem 4. The dust seal 18 is installed in the groove of upper part of top plate 8 to prevent the dust from join in the inside bonnet and body.

### Rolling bearing

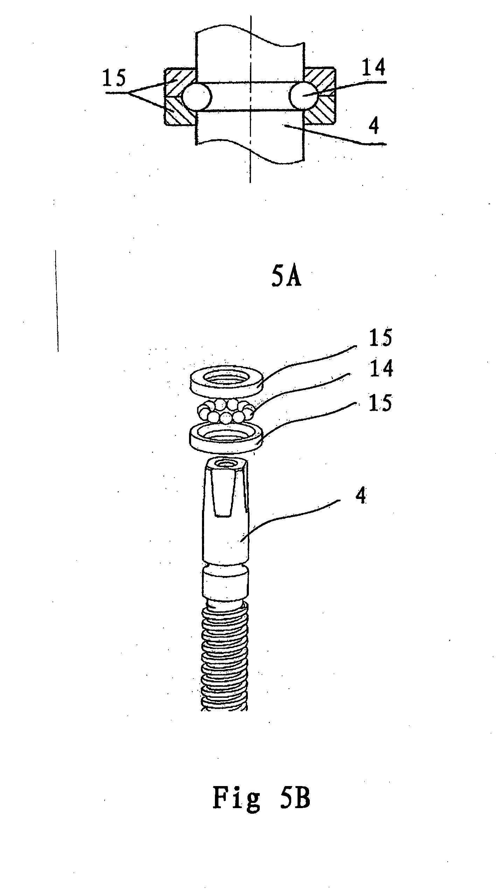

As shown in Fig.1, in the existing gate valve, the plane sliding bearing structure is often used to support the stem. The movement kits are stem (common material is carbon steel or stainless steel) and plane bearing (common material is copper alloy), and the sliding friction coefficient is 0.1-0.15. As shown in Figs.5A and 5B, in this invention, in order to reduce friction coefficient and operation torque and to ensure certain safety coefficient, rolling bearing 14 is used to support the structure of stem 4. Specifically, on the top of top plate 3, rolling bearing 14 is installed between upper sleeve 15 and lower sleeve 15. The rolling balls with high strength of rolling bearing 14 are contained in the grooves provided in the surface of stem 4. Movement kits are stem 4 and rolling bearing 14, and thus the rolling friction coefficient thereof is comparable to that of deep groove ball bearings, being only 0.002-0.004.

Specifically, contact between rolling bearings 14 and stem 4 occurs between the groove in the stem 4 and rolling balls with high strength, in a form of lineal contact. The action and reaction between movement kits are also transmitted in a form of lineal contact. To ensure the life of movement kit and to meet the requirements of design and related standards, the stem groove which has been machined exactly and the high-strength steel ball diameter are managed by means of matching and grouping, so as to Control the motion gap between each other at a reasonable range.

Specifically, stem groove which has been machined exactly can be chosen, grouped and matched according to the size of R. For example, if the basic size of stem groove semi diameter is R3.000, the basic diameter of steel ball is 6.000(semi diameter size is R3.000), then they are grouped and chosen by the deviation of 0.01 mm. Stem can be divided into three groups: stem A (R2.990-3.000), stem B (R3.000-3.010), stem C (R3.010-3.020). Rolling balls can also be divided into three groups: Rolling ball A (radius of R2.980-R2.990), Rolling ball B (radius of R2.990-R3.000), Rolling ball C (radius of R3.000-3.010). Then the stems and rolling balls are matched and assembled to ensure the match accuracy of movement kit. That is to say, stem A and rolling ball A, stem B and rolling ball B, and stem C and rolling ball C are assembled, respectively.

Besides, According to different requirements of different customers, the reasonable stem and steel ball materials are chosen. As for stem, excellent carbon steel, SUS431 or other excellent stainless steel can be used. As for steel ball, S440C, high-chromium steel, bronze, ceramic, carbide can be used. The materials can be processed to make the hardness and abrasion resistance satisfy specific requirements. For example, the stem can be annealed and tempered, and the stem groove can be chrome plated and polished, sprayed enamel and so on.

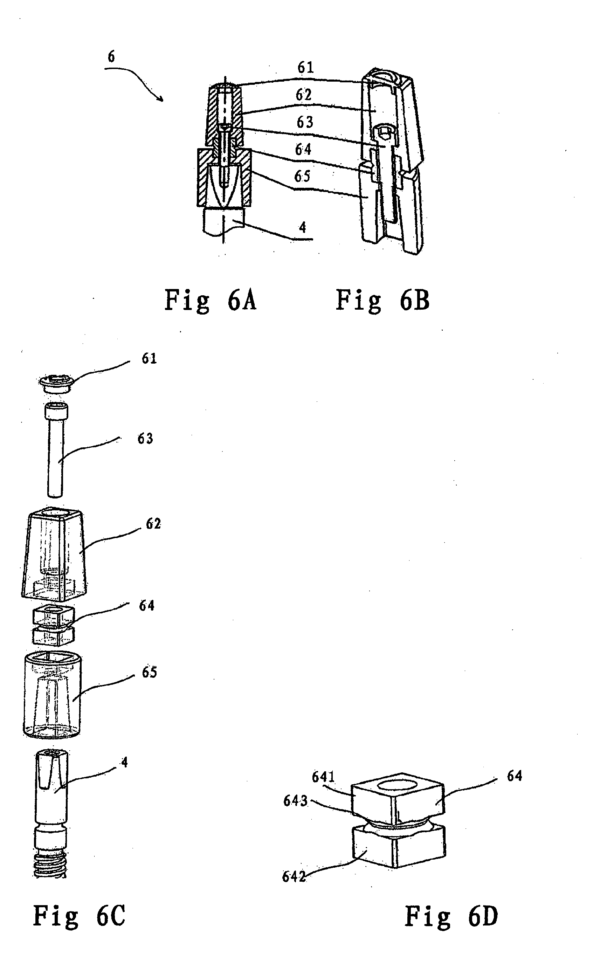

In addition, the following detailed described over torque shear device 6(see Figs.6A-6D) ensures effectively that the movement kit of rolling bearing will not be damaged due to heavy operation load. The valve body cavity size and the wedge coated with rubber coating of uniform thickness are controlled to ensure that the actual operation torque is not too high due to out of tolerance dimension of the valve seat sealing parts matching size. During actual production, actual operation torque value of each product is tested, and the upper limit of quality and acceptance criteria are set to ensure the safety life of the rolling bearing movement kit.

By using the above specially designed rolling bearing instead of current used plane sliding bearing, the friction coefficient between stem 4 and rolling bearing 14 is reduced effectively, thus operation torque is reduced greatly and the life of stem 4 and rolling bearing 14 is prolonged. This can be seen from following contrast test.

As for a non-rising spindle gate valve, in a case where other parts (body 2, valve5, bonnet3) and test condition (test pressure, test instrument and personnel) are identical, only the plane sliding bearing is replaced by rolling bearing 14 to do torque contrast test. The test results are as follows.

**Table 1 non-rising spindle gate valve torque contrast test**

| | Ball bearing(N.m) | | | | Sliding bearing(N.m) | | | |
|---|---|---|---|---|---|---|---|---|
| | One side | | Another side | | One side | | Another side | |
| pressure | 0.2bar | 18bar | 0.2bar | 18bar | 0.2bar | 18bar | 0.2bar | 18bar |
| sample1 | 15 | 13 | 13 | 12 | 30 | 19 | 31 | 21 |
| Sample2 | 17 | 13 | 18 | 12 | 31 | 26 | 27 | 20 |
| Sample3 | 32 | 34 | 35 | 25 | 50 | 50 | 50 | 49 |
| Sample4 | 19 | 10 | 13 | 17 | 31 | 24 | 29 | 22 |
| Sample5 | 30 | 26 | 30 | 18 | 50 | 45 | 50 | 47 |
| Sub Average | 22.6 | 19.2 | 21.8 | 16.8 | 38.4 | 32.8 | 37.4 | 31.8 |
| Average | 20.1 | | | | 35.1 | | | |
| % | 57% | | | | | | | |

From the above table, if using rolling bearing, 43% operation torque can be reduced.

### Shear device

With reference to Figs.6A-6D, the shear device 6 in the gate valve in this invention is described. The traditional gate valve usually directly use shear cap which is installed on the upper end of the stem to operate gate valve. Thus when at working, the inner parts will be damaged due to over operation torque imposed on the shear cap. Therefore, the whole gate valve has to be replaced. According to the gate valve 1 of this invention, the shear device 6 is used to ensure safe operation torque imposed on the gate valve 1.

Shear device 6 includes shear cap 62, insurance block 64 and connection sleeve 65. The shear cap 62 and connection sleeve 65 are connected together through insurance block 64. The inner part of connection sleeve 65 has a non-circular cross section (for example rectangle) inner hole to match to the shape of the non-circular cross section of the upper end of stem 4. Insurance block 64 includes upper part 641, lower part 642 and middle part 643 which connects upper part and lower side. Upper part 641 and lower part 642 both preferably have a non-circular cross section, for example rectangle. Middle part 643 can be groove and its cross sectional area is smaller than that of upper part 641 and lower part 642 to ensure that the minimum section area bearing capacity of middle part 643 is smaller than the required safe torque. So, if the torque applied on the insurance block 64 exceeds the safety torque, the middle part 643 would be broken so as to ensure that the excessive torque would not be transmitted to the stem 4 and relevant components through the insurance block 64.

When assembling, the upper part 641 of the insurance block 64 is fitted with shear cap 62, and the lower part 642 is fitted with the connection sleeve 65. Therefore, the assembly of the components which connect shear cap 62, insurance block 64 and connection sleeve 65 as a whole is fitted on the upper end of stem 4. Then the screw 63 is penetrated through the through hole of shear cap 62, insurance block 64 and connection sleeve 65 to be screwed into the hole of the upper end of stem 4. Finally, the through hole over shear cap 62 is plugged with protective rubber plug 61 to prevent dust from entering into shear device 6.

When the operation mechanism (T-bar or other) acts on the cap 62, the operation torque is transmitted to the stem 4 through cap 62, insurance block 64, connection sleeve 65, thus driving the stem 4 to rotate. When the operation torque is beyond the minimum cross-section bearing capacity of the middle part 643 of the insurance block 64, the insurance block 64 will fail or break, thus the torque fails to be transmitted to the valve stem 4 so that the whole gate valve 1 and its components are protected from damage. When the insurance block 64 is damaged by excessive operation torque, it is only necessary to easily replace the shear device 6 outside of the gate valve 1 without need to change the whole gate valve, saving time and cost greatly.

### Wedge rubber coating

In current process of rubber coatings for wedges, a rubber sheet with a thickness is usually used to position the rough wedge casting inside. However, flexible rubber will be displaced to produce a bigger deviation when it receives an uneven force, thus resulting in an uneven rubber coating thickness, which has a bad effect on sealing and sealing operation torque of the gate valve.

As for the sealing operation torque of gate valve, at the same pressure condition, one of the major determinants is the percentage of the amount of rubber compression and deformation in the area of body cavity of the seat and the sealing kit area between wedges. For example: the rubber thickness design in the sealing area of both sides of wedges is 5mm, the amount of compression deformation is 1.5mm when the pressure is 16bar. According to the theoretical design and practical verification, when the rubber coating thickness is consistent on both sides of the wedge, the percentage of compression is 1.5/5=30%. If a position deviation of 1 mm is produced due to uneven force in the process of rubber coating of wedges, then the actual thicknesses in the sealing area on both sides of wedge are 4mm and 6mm. At the same pressure condition of 16bar, the amount of sealing compression of rubber should be 1.5mm to meet the requirements of seal. As for the side of 4mm, the compression percentage is 1.5/4=37.5%. So a greater force is required to make the theoretical compression percentage of 30% meet the requirements of actual sealing of 37.5%, which increased operating torque.

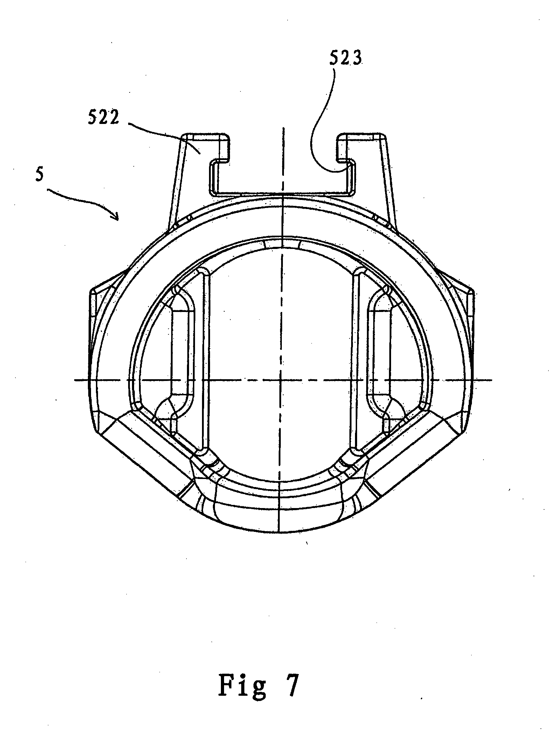

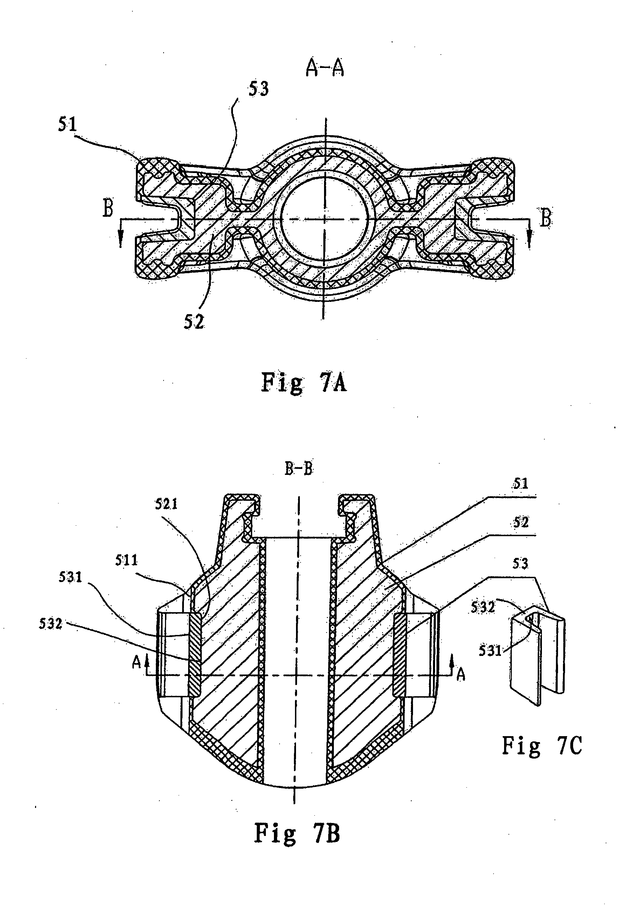

In order to position the wedge casting during process of wedge rubber coating, the gate valve of this invention uses the following described wedge and corresponding rubber coating Process. Figs.7, 7A and 7B show a wedge 5 after rubber coating. Wedge 5 includes wedge casting 52, guides 53(Fig.7C), and rubber coating layer 51. The figures only show two guides 53, but the quantity and position are not limited by this. They may be set according to the actual application settings as long as they can be used to position the wedge casting. Accordingly, grooves 521 are provided on the both sides of the wedge casting 52 to receive guides 53. As the figures show, guide 53 and groove 521 are substantially U-shaped and matched with each other. It should be noted that guide 53 and groove 521 can have any other shape that is matched with each other. The guides 53 can be formed by arbitrary material suitable for sealing wedge, preferably by injection molding.

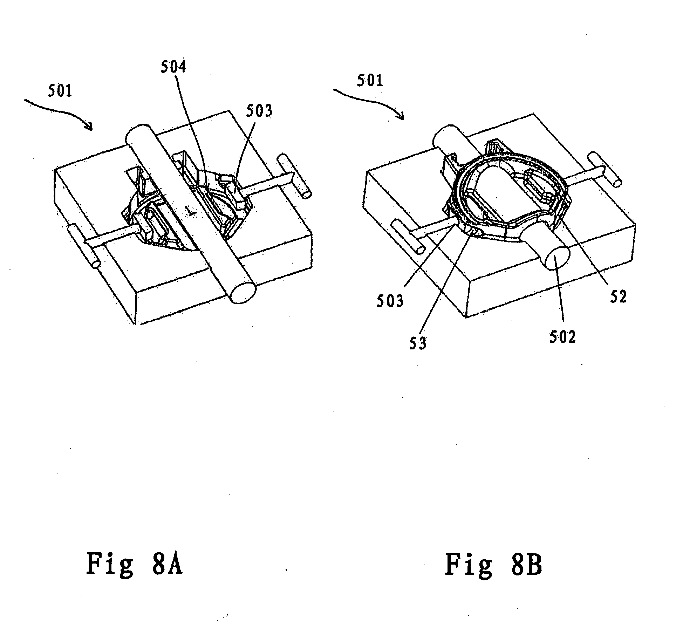

The guide 53 has a bottom surface engaging with an engaging surface of the groove 521 of the wedge casting 52, and a positioning surface 531 engaging with a positioning block 503 of the coating mould 501 (see Figs.8A, 8B). The thickness of guide 53 can be determined according to the thickness of rubber coating layer to be coated.

The positioning surface 531 is not lower (preferably higher) than the outer surface 511 of the rubber coating layer 51 after rubber coating, so that the positioning surface 531 is flush with the outer surface 511 of rubber coating layer or slightly projected. Thus, after assembling wedge 5 with rubber coating into gate valve 1, the positioning surface 531 contacts with the coating layer inside body 2. Because guide 53 is preferably formed by injection molding of plastic, not only wedge 5 is sealed, but also the friction coefficient between the positioning surface 531 of the guide 53 and the inner coating of body 2 is smaller than the friction coefficient between the outer surface 511 of rubber coating layer 51 and inner coating of body 2. Therefore, the operation torque is reduced by reducing friction.

Below referring to Figs.8A and 8B is described the process of rubber coating of wedge 5 in this invention. As showing in Fig.8A, before rubber coating, the positioning blocks 503 on the both sides of the coating mould 501 are separated, and the core rod 502 is positioned in the mould cavity 504. Then, the guides 53 are inserted into grooves 521 on both sides of the wedge casting 52. As shown in Fig.8B, the wedge casting 52 and the guides 53, which have been firmly embedded on both sides and firmly fitted into the mold cavity 504, are put into the mould cavity 504, and the positioning blocks 503 in the mould cavity 504 are directly positioned on the positioning surface 531 of two guides 53. Therefore, the wedge casting 52 and guide 53 will not move, ensuring the exact positioning in rubber coating process. The rubber coating thickness of coating layer 51 is ensured to be even to satisfy the requirements of design thickness.

### Stem sealing

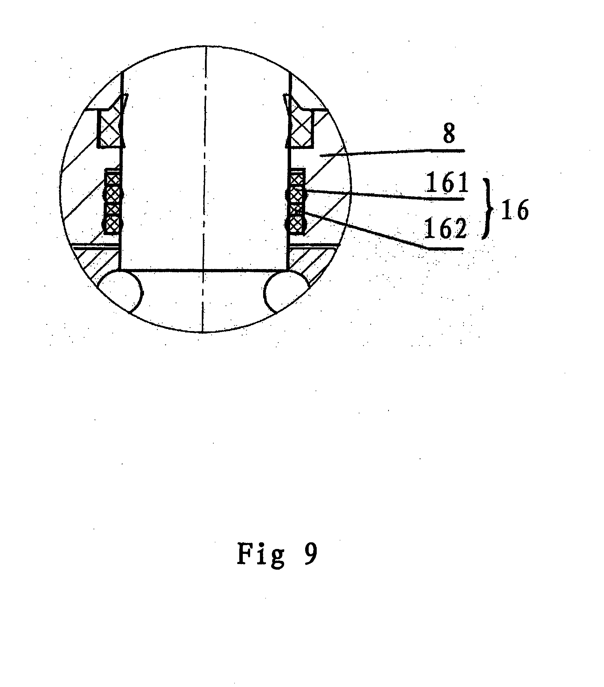

As shown in Fig.1, the current gate valves usually have slots on the stem to place O ring. As shown in Fig.9, in the gate valve of this invention, the seal kits 16 including several seal rings and PTFE rings include the components of O rings 161 (two) and PTFE rings 162(two), and are put into the inner hole groove of top plate 8. Top plate 8 is made of stainless steel, and its inner groove is made by precise machining to ensure the size of the seal groove. Because the O rings 161 and PTFE rings 162 can adjust the seal gap automatically according to the seal pressure in the groove of top plate 8, the sealing performance is more reliable. As the PTFE material has excellent lubricating feature, the whole sealing kit 16 experiences no corrosion damage, and thus the life of the whole sealing kit 16 is extended.

### Self-positioning device

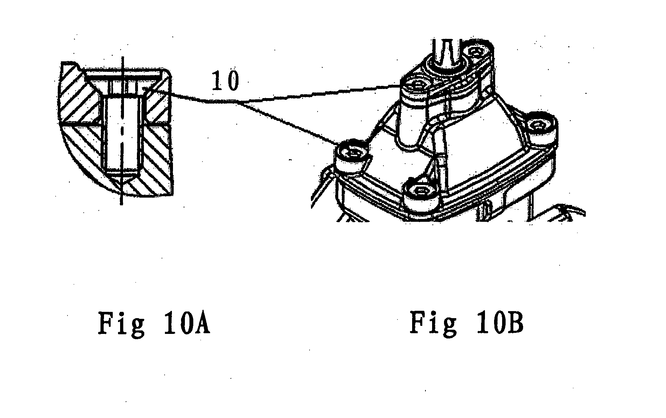

As shown in Figs.10A and 10B, the gate valve 1 in this invention use unique inner hexagon screws as connecting screws 10 to connect body 2 and bonnet 3 and to connect bonnet 3 and top plate 8. For example, the upper part of connecting hole in the bonnet 3 has certain taper which matches to the inner hexagon taper surface of connecting screw 10. Therefore, during assembling, they can help the automatic centering between the bonnet 3 and body 2 and between the bonnet 3 and top plate 8, to ensure the alignment of the body 2 of gate valve 1, bonnet 3 and top plate 8, thus ensuring the fitting precision between each other. At the same time, it is convenient to assemble, and there is no need to adjust while assembling.

This invention is not limited by above examples, and various changes and modification are allowed without departing from the scope of this invention, as defined by the appended claims.

## Claims

1. A non-rising spindle gate valve, comprising a body (2), a bonnet (3) connected to the body (2), a stem (4), a wedge (5) and a shear device (6), an upper end of said stem (4) being connected to the shear device (6) and a lower end thereof being connected to the wedge (5),
being **characterized in that**, said wedge (5) includes a wedge casting (52), guides (53) and a rubber coating layer (51), said guides (53) are fitted in respective grooves (54) of the wedge casting (52) to position said wedge casting (52) in the process of wedge rubber coating.

2. The non-rising spindle gate valve according to claim 1, being **characterized in that**, the guides (53) have a substantially U shape.

3. The non-rising spindle gate valve according to claim 1, being **characterized in that**, said guides (53) are injection molded by plastics.

4. The non-rising spindle gate valve according to claim 1, being **characterized in**
that, said guides (53) have a bottom surface engaging with said grooves (54) and a positioning surface engaging with a positioning device of rubber coating mould during rubber coating.

5. The non-rising spindle gate valve according to claim 4, being **characterized in that,** with respect to said bottom surface, said positioning surface is no lower than outer surface of said rubber coating layer (51) near said guide (53).

6. The non-rising spindle gate valve according to any one of claims 1-5, being **characterized in that**, said gate valve further includes a top plate (8) installed above said bonnet (3), and a seal (16) including a plurality of rings is provided between said top plate (8) and said stem (4).

7. The non-rising spindle gate valve according to claim 6, being **characterized in that**, said seal includes O rings (161) and PTFE rings (162).

8. The non-rising spindle gate valve according to any one of claims 1-5, being **characterized in that**, said body (2) is connected with said bonnet (3) through inner hexagon screws (10), and a portion of holes in said bonnet (3) for receiving said inner hexagon screws (10) has a taper which matches taper surfaces of said inner hexagon screws.

9. The non-rising spindle gate valve according to any one of claims 1-5, being **characterized in that**, said gate valve further includes a top plate (8) installed above said bonnet (3); said bonnet (3) is connected with said top plate (8) through inner hexagon screws (10), and a portion of holes in said top plate for receiving said inner hexagon screws (10) has a taper which matches taper surfaces of said inner hexagon screws (10).

## Patentansprüche

1. Ein Absperrventil mit nicht steigender Spindel, bestehend aus einem Gehäuse (2), einem Aufsatz (3), der mit dem Gehäuse (2) verbunden ist, einem Schaft (4), einem Keil (5) und einem Scherungselement (6), wobei ein oberes Ende des besagten Schaftes (4) mit dem Scherungselement (6) und ein unteres Ende davon mit dem Keil (5) verbunden ist,
dadurch charakterisiert, dass besagter Keil (5) ein Keilgussteil (52), Führungen (53) und eine Gummischicht (51) einschließt, wobei besagte Führungen (53) in die entsprechenden Nuten (521) des Keilgussteiles (52) eingepasst sind, um besagtes Keilgussteil (52) im Prozess der Keil-Gummibeschichtung zu positionieren.

2. Das Absperrventil mit nicht steigender Spindel gemäß Anspruch 1, **dadurch gekennzeichnet, dass** die Führungen (53) substantiell eine U-Form aufweisen.

3. Das Absperrventil mit nicht steigender Spindel gemäß Anspruch 1, **dadurch gekennzeichnet, dass** die besagten Führungen (53) aus Kunststoff in Spritzguss hergestellt sind.

4. Das Absperrventil mit nicht steigender Spindel gemäß Anspruch 1, **dadurch gekennzeichnet, dass** besagte Führungen (53) eine Bodenfläche, die in die besagte Nut (521) einrastet, und eine Positionierungsfläche, die während der Gummibeschichtung in ein Positionierungselement der Gummibeschichtungs-Form einrastet, aufweisen.

5. Das Absperrventil mit nicht steigender Spindel gemäß Anspruch 4, **dadurch gekennzeichnet, dass** bezüglich der besagten Bodenfläche, die besagte Positionierungsfläche nicht niedriger ist als die Außenfläche der besagten Gummischicht (51) an der besagten Führung (53).

6. Das Absperrventil mit nicht steigender Spindel gemäß eines der Ansprüche 1-5, **dadurch gekennzeichnet, dass** besagtes Absperrventil darüberhinaus eine Kopfplatte (8), die über dem besagten Aufsatz (3) angebracht ist, und eine Dichtung (16) mit mehreren Ringen einschließt, die zwischen der besagten Kopfplatte (8) und dem Schaft (4) angebracht ist.

7. Das Absperrventil mit nicht steigender Spindel gemäß Anspruch 6, **dadurch gekennzeichnet, dass** besagte Dichtung O-Ringe (161) und PTFE-Ringe (162) umfasst.

8. Das Absperrventil mit nicht steigender Spindel gemäß eines der Ansprüche 1-5, dadurch charakterisiert, dass besagtes Gehäuse (2) mit dem Aufsatz (3) über Innensechskantschrauben (10) verbunden ist, und ein Teil der Bohrungen in besagtem Aufsatz (3) zur Aufnahme dieser Innensechskantschrauben (10) eine Abschrägung aufweist, die mit den Abschrägungsflächen der besagten Innensechskantschrauben übereinstimmt.

9. Das Absperrventil mit nicht steigender Spindel gemäß eines der Ansprüche 1-5, **dadurch gekennzeichnet, dass** besagtes Absperrventil darüberhinaus eine Kopfplatte (8) einschließt, die über dem besagten Aufsatz (3) installiert ist, der besagte Aufsatz (3) ist über Innensechskantschrauben (10) mit der Kopfplatte (8) verbunden und ein Teil der Bohrungen in besagter Kopfplatte zur Aufnahme dieser Innensechskantschrauben (10) weist eine Abschrägung auf, die mit den Abschrägungsflächen der besagten Innensechskantschrauben (10) übereinstimmt.

## Revendications

1. Un robinet-vanne à tige non montante, comprenant un corps (2), un couvercle (3) raccordé au corps (2), une tige (4), un clapet (5) et un dispositif de cisaillement (6), une extrémité supérieure de ladite tige (4) étant raccordée au dispositif de cisaillement (6) et une extrémité inférieure de celui-ci étant raccordée au clapet (5),
qui est **caractérisé en ce que** ledit clapet (5) comprend une pièce moulée de clapet (52), des guides (53) et une couche de revêtement en caoutchouc (51), lesdits guides (53) étant fixés dans des rainures respectives (521) de la pièce moulée de clapet (52) de façon à positionner ladite pièce moulée de clapet (52) au cours du processus de revêtement en caoutchouc du clapet.

2. Le robinet-vanne à tige non montante selon la Revendication 1 qui est **caractérisé en ce que** les guides (53) possèdent une forme sensiblement en U.

3. Le robinet-vanne à tige non montante selon la Revendication 1 qui est **caractérisé en ce que** lesdits guides (53) sont moulés par injection de matière plastique.

4. Le robinet-vanne à tige non montante selon la Revendication 1 qui est **caractérisé en ce que** lesdits guides (53) possèdent une surface inférieure entrant en prise avec lesdites rainures (521) et une surface de positionnement entrant en prise avec un dispositif de positionnement de moule de revêtement en caoutchouc au cours de l'opération de revêtement en caoutchouc.

5. Le robinet-vanne à tige non montante selon la Revendication 4 qui est **caractérisé en ce que**, par rapport à ladite surface inférieure, ladite surface de positionnement n'est pas plus basse que la surface extérieure de ladite couche de revêtement en caoutchouc (51) près dudit guide (53).

6. Le robinet-vanne à tige non montante selon l'une quelconque des Revendications 1 à 5 qui est **caractérisé en ce que** ledit robinet-vanne comprend en outre une plaque supérieure (8) installée au-dessus dudit couvercle (3) et un joint d'étanchéité (16) comprenant une pluralité de joints est fourni entre ladite plaque supérieure (8) et ladite tige (4).

7. Le robinet-vanne à tige non montante selon la Revendication 6 qui est **caractérisé en ce que** ledit joint d'étanchéité comprend des joints toriques (161) et des joints en PTFE (162).

8. Le robinet-vanne à tige non montante selon l'une quelconque des Revendications 1 à 5 qui est **caractérisé en ce que** ledit corps (2) est raccordé audit couvercle (3) par l'intermédiaire de vis hexagonales intérieures (10), et une partie à trous dans ledit couvercle (3) destinée à recevoir lesdites vis hexagonales intérieures (10) possède un biseau qui correspond à des surfaces en biseau desdites vis hexagonales intérieures.

9. Le robinet-vanne à tige non montante selon l'une quelconque des Revendications 1 à 5 qui est **caractérisé en ce que** ledit robinet-vanne comprend en outre une plaque supérieure (8) installée au-dessus dudit couvercle (3), ledit couvercle (3) étant raccordé à ladite plaque supérieure (8) par l'intermédiaire de vis hexagonales intérieures (10), et une partie à trous dans ladite plaque supérieure (8) destinée à recevoir lesdites vis hexagonales intérieures (10) possède un biseau qui correspond à des surfaces en biseau desdites vis hexagonales intérieures (10).
